# EUROPEAN PATENT APPLICATION

(11) **EP 4 176 955 A1**
(43) Date of publication of application: **10.05.2023**
(21) Application number: 22206129.3
(22) Date of filing: 08.11.2022
(51) Int. Cl.: B01D 29/56, B01D 36/02, B01D 17/00, B01D 17/04, B08B 3/00, B01D 36/00, B08B 9/08, B60P 3/22, B65D 88/74

(54) **DIESEL FUEL PURIFICATION PROCESS AND PLANT**

(30) Priority: 08.11.2021 IT 202100028382
(71) Applicant: IMA Servizi S.r.l., 31032 Casale sul Sile (IT)
(72) Inventor: LESCI, Isidoro Giorgio, Ravenna (IT)
(74) Representative: Rigamonti, Dorotea

(57) **Abstract**

It is the object of the present invention a process for the purification of the diesel fuel contained in a cistern and / or in a tank, wherein said process comprises:
- passage of the diesel fuel through at least a first filter, with separation of the coarser solids, obtaining pre-filtered diesel fuel;
- passage of said pre-filtered diesel fuel through a filter pack made of hydrophobic material, with a pore size between 0.2 and 1 µm;
- re-introduction of the diesel fuel thus purified into the cistern and / or into the tank.

It is a further object of the present invention a plant for implementing said process.

## Description

### Background art

Unwanted liquid, solid and / or bacterial contaminants may be found in storage cisterns and in tanks fitted on vehicles containing diesel fuel.

The main liquid contaminant is water. A portion is condensation water, mainly due to seasonal temperature changes.

Water in the cisterns and / or tanks is the cause of three main issues:
a) Formation of rust: water, in combination with oxygen, leads to the corrosion of metal alloys with consequent formation of rust. The risk, in addition to the wear of the plant, is that the rust particles are not properly filtered and may reach the injectors.
b) Formation of bacteria: the water on the bottom of the tank provides the ideal environment for the emergence of bacterial colonies which, feeding on diesel fuel, proliferate until algae, mucilage and gel appear.
c) Reduction of lubrication: water reduces the lubricating properties of fuels. This leads to a dryness of the fuel system and therefore to an accelerated wear thereof.

Reference specification EN 590 establishes that the maximum water content in cisterns containing diesel fuel must be less than 200 mg/kg, i.e., less than 0.02%.

Solid contaminants mainly consist of sand and dust capable of causing a premature wear of pumps and injectors. The solids which form and accumulate on the bottom of the tank or cistern are also caused by the natural degradation process of diesel fuel. The sludge forms a coating or bio-film on the walls, which obstructs the filters and the supply lines, thus damaging the equipment. Reference specification EN 590 sets a maximum of 24 mg/kg of solid contaminants.

Bacterial contamination of diesel fuel is significantly important. To reduce CO₂ emissions into the atmosphere, and consequently the greenhouse effect, diesel and petrol fuels currently on the market contain a % of biofuels. Currently, the addition of biodiesel in diesel fuel is conventionally 7% (v/v). Biodiesel inevitably adds water and a microbial load, thus favoring the proliferation of bacteria and microorganisms in the cistern.

The biggest issue is caused by the black and rubbery algae which, over time, obstruct the pump which draws diesel fuel from the tank, causing a greater stress, until it completely breaks.

In each passage from the refinery to the site of use, the contamination increases.

To date, once diagnosed a too high microbial load in the diesel fuel, the issue is tackled by means of a mechanical remediation followed by a chemical remediation of the cistern. I.e., after removing the formed material, the cistern is treated with a biocide.

This type of intervention involves an unwanted shutdown of the system. Therefore, it is the object of the present invention a diesel fuel conditioning process and plant, which prevents the accumulation of contaminants therein, with lower operating costs with respect to the processes currently available.

### Description of the invention

It is the object of the present invention to provide a process, called SPG, and a plant for implementing it.

### Description of the drawings

**Figure 1****:** diagram of the SPG process according to an embodiment. O indicates the optional presence of a process control sensor.
**Figure 2****:** diagram of the plant for implementing the SPG process
**Figure 3****:** perspective view of an embodiment of the plant according to the present invention (A) overall perspective view; (B) perspective view of a detail.
**Figure 4****:** optical microscope photographs of samples of (A) dirty diesel fuel; (B) diesel fuel after a filtration step at 100 µm; (C) diesel fuel after a further filtration step at 25 µm, (D) diesel fuel purified by means of the process according to the present invention.

The process according to the present invention is characterized in that the diesel fuel drawn from a cistern and / or a tank, stripped of the coarser solid contaminants and of a portion of water, is filtered through filters having a pore size between 0.2 and 1 µm, wherein said filters are made of hydrophobic material, preferably PTFE.

Therefore, it is the object of the present invention an SPG process comprising the following steps:
- pumping of the diesel fuel from the cistern and / or tank and the passage thereof through at least a first filter, with separation of the coarser solids, obtaining pre-filtered diesel fuel;
- passage of the pre-filtered diesel fuel through a filter pack made of hydrophobic material, with a pore size between 0.2 and 1 µm;
- re-introduction of the diesel fuel thus purified into the cistern and / or into the tank.

In a preferred embodiment, said filter pack comprises at least three filters having a pore size between 0.2 and 1 µm. In an embodiment, said filter pack comprises a first filter having a pore size of 1 µm, a second filter having a pore size of 0.6 µm, a third filter having a pore size of 0.2 µm.

In a preferred embodiment, said process comprises:
- pumping of the diesel fuel from the cistern and passage thereof through a 100 µm self-cleaning separator filter, obtaining pre-filtered diesel fuel pt.,
- passage of the pre-filtered diesel fuel 1^{st} through a first 25 µm filter pack, obtaining pre-filtered diesel fuel 2^{nd};
- passage of the pre-filtered diesel fuel 2^{nd} through a coalescing filter with separate water recovery, obtaining pre-filtered diesel fuel 3^{rd};
- passage of the pre-filtered diesel fuel 3^{rd} through a second filter pack made of hydrophobic material, with a pore size between 0.2 and 1 µm, obtaining purified diesel fuel;
- re-introduction of the purified diesel fuel into the cistern.

In a preferred embodiment, said process further comprises:
- washing of the cistern and / or the tank with purified diesel fuel.

Said washing preferably occurs by spraying the diesel fuel obtained at the end of the SPG process into the cistern and / or tank through nozzles that spray at 360°, at a pressure between 50 and 90 bar, or between 60 and 80 bar, or at 70 bar, reaching a range of 2 - 20 m, or 5 - 15 m, or 10 m.

In a preferred embodiment, said process further comprises:
- backwashing of the filters.

Said backwashing is carried out by spraying purified diesel fuel on the filters. Said purified diesel fuel used for the backwash, filtered of coarse impurities, is recovered.

In a preferred embodiment, said process is repeated until an acceptable turbidity value is obtained, wherein said turbidity value is measured by means of a sensor, preferably located between the drawing pump and the separator filter.

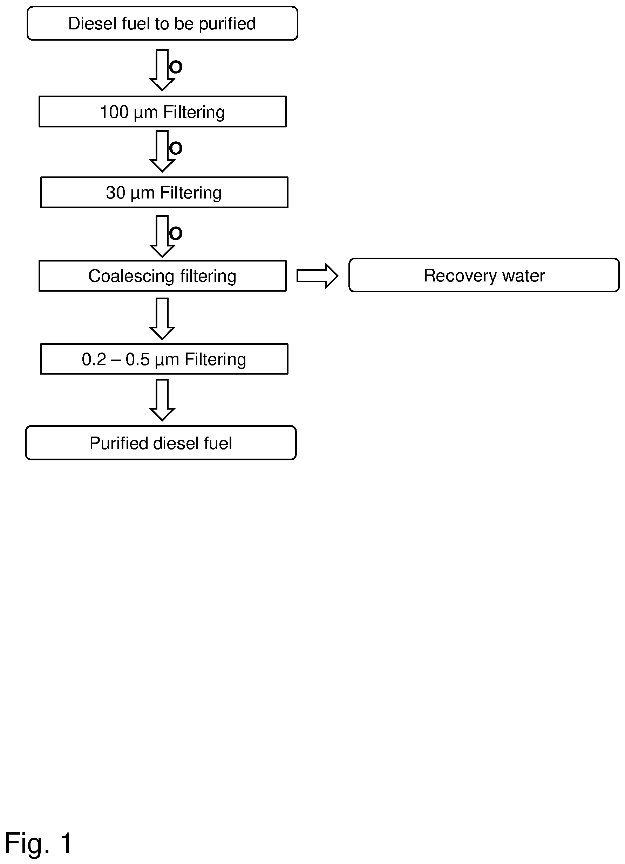

The process according to the present invention is schematized, in an embodiment, in the flow diagram of Figure 1.

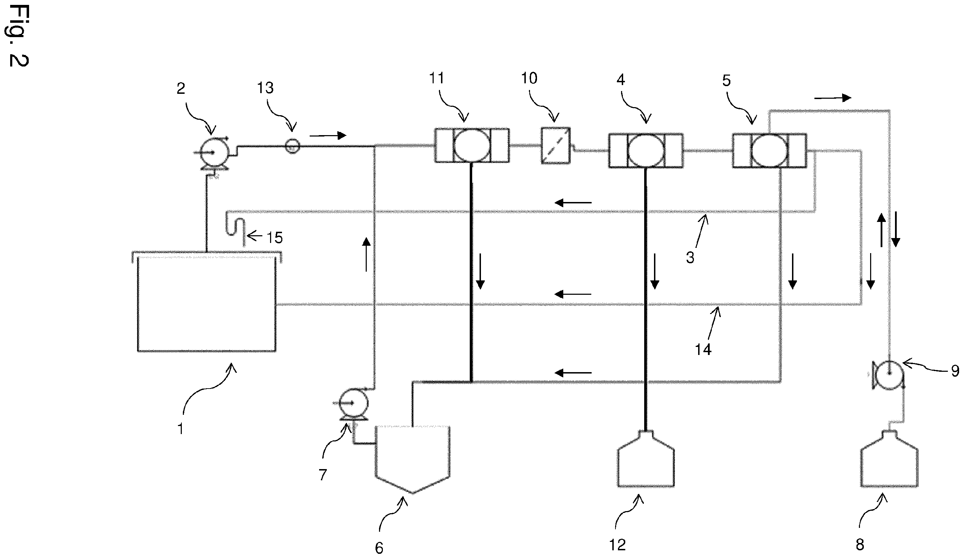

It is a further object of the present invention a plant according to Figure 2 comprising:
- a pump (2) suitable for sucking diesel fuel from the cistern and / or the tank (1);
- a 100 µm self-cleaning separator filter (11);
- a first filter pack (10) with a pore size of about 25 µm;
- a coalescing filter (4)
- a tank (12) for the recovery of water from said coalescing filter (4);
- a second filter pack (5) in hydrophobic material, preferably in PTFE, with a pore size between 0.2 and 1 µm;
- a first line of purified diesel fuel (3) which collects a portion of said purified diesel fuel at the outlet of said second filter pack (5) and feeds it through nozzles (15) into said cistern (1) for washing it;
- a second line of purified diesel fuel (14), for re-introduction into said cistern (1)
- a contaminant discharge tank (6), for collecting the contaminants from said filters (4, 5, 10, 11);
- a backwash tank (8) which receives said purified diesel fuel and, through a pump (9), re-injects it in said filters (4, 5, 11) for backwashing of the same.

Said first filter pack (10) preferably consists of washable filters, which are not self-cleaning by backwashing.

Said coalescing filters (4), separator (11) and second filter pack (5) preferably consist of filters which are self-cleaning by backwashing.

During the backwashing of the filters, the purified diesel fuel used reaches the discharge tank (6). To reduce waste, access to said discharge tank (6) comprises a steel mesh filter which retains the coarser impurities and allows said recovered diesel fuel to be re-introduced into circulation by means of a pump (7).

In a preferred embodiment, said first line of purified diesel fuel (3) feeds said purified diesel fuel into said cistern (1) through nozzles (15) at a pressure of between 50 and 90 bars, preferably of between 60 and 80 bars. In a preferred embodiment, said nozzles (15) spray at 360°, at 70 bar, reaching a range of 10 m.

In a preferred embodiment, said plant also comprises a turbidity sensor (13) positioned between said drawing pump (2) and said separator filter (11).

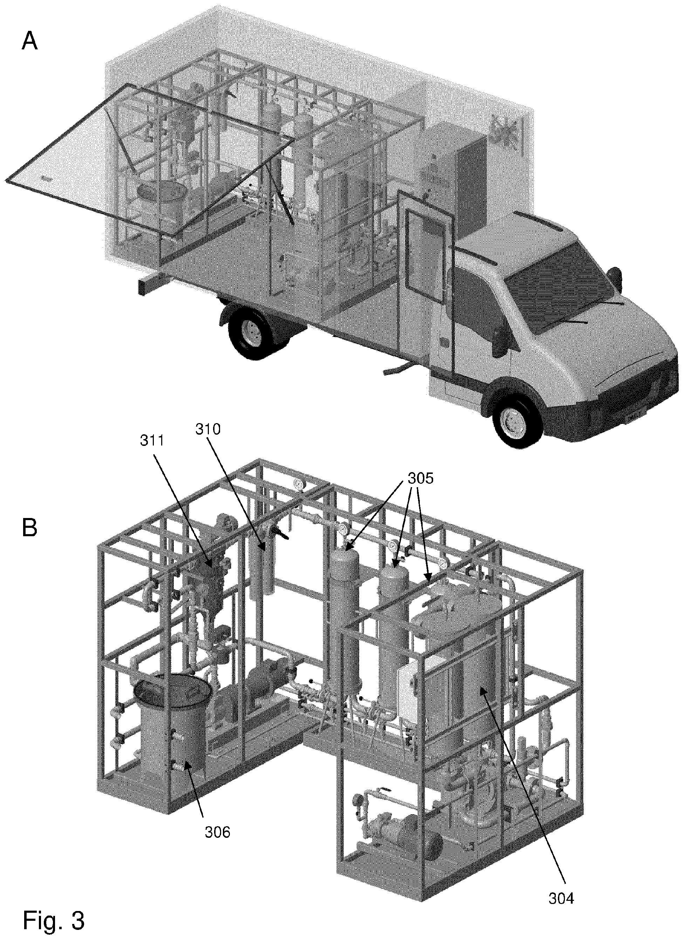

In an embodiment, said plant is conveniently installed on a closed truck. The truck is preferably a truck having a capacity of 3500 kilograms, diagrammatically shown in Figure 3A. In this embodiment, with reference to Figure 3B, said plant comprises:
- a pump suitable for sucking diesel fuel from a cistern and / or a tank and load it into said plant;
- a 100 µm self-cleaning separator filter (311);
- a first filter pack (310) with a pore size of about 25 µm;
- a coalescing filter (304)
- a second filter pack (305) in hydrophobic material, preferably in PTFE, with a pore size between 1 and 0.2 µm;
- one or more additional pumps for diesel fuel recycling, filter backwashing;
- a contaminant discharge tank (306).

The plant is completed by an electrical panel, two-way PVC-U solenoid valves, a discharge and backwash accumulation tank, a purified diesel storage tank for backwashing. Optionally, said plant is also equipped with control equipment, for example, a turbidimeter, transmitters, differentials.

The embodiment on board a truck conveniently allows to carry out the purification home served. The nominal capacity of this plant installed on a truck is up to 7 m³/h

In an embodiment, the plant according to the present invention comprises one or more further automations which are known to the person skilled in the art.

In an embodiment, said plant comprises one or more control systems. By way of example, said systems comprise the local and / or remote monitoring and management of process parameters, the monitoring and management of solenoid valves, pumps, backwashing, tank discharge. Said control systems are implemented with devices which are known to those skilled in the art. Advantageously, the process according to the present invention has allowed to implement a filtration considered capable of sterilizing liquids, i.e., at a porosity of about 0.22 µm. This filtration ensures the absence of microorganisms in the treated diesel fuel, thus avoiding the unwanted proliferation of algae and biofilm, in the absence of subsequent contamination. The process was surprisingly made possible by the fact that:
- the "sterilizing" filtration is carried out with coarser filtrations, which avoid the rapid obstruction of the filtering system;
- the "sterilizing" filtration is carried out with hydrophobic filters. Conventionally, hydrophilic coalescing filters are used to filter diesel fuel to facilitate the removal of water and contaminants. The process according to the present invention carries out a first water elimination step, and then uses the property of the interfacial tension between microorganisms (bacteria, algae and fungi), diesel fuel and the surface of the membranes. The interaction energy between microorganisms, which are generally hydrophilic, and the diesel fuel, which is hydrophobic, is minimal. This facilitates the passage of the diesel fuel through the hydrophobic filter surface. For the same reason, the low interfacial tension interaction between filter and microorganisms hinders the passage thereof through the filter surface. Furthermore, since it is difficult for microorganisms to attach to the surface of the filter, the formation of scale decreases, thus reducing the need to operate backwashes, increasing the life of the filters and ensuring greater results in terms of flow rate with respect to the choice of a hydrophilic filter.

The stringent filtration process according to the present invention allows an almost complete elimination of the microbial load in said diesel fuel.

The following examples have the sole purpose of better illustrating the invention and are not to be intended as limiting it in any manner, the scope of which is defined by the claims.

### Examples

### Example 1: analysis of the diesel fuel purified with the process according to the present invention

Diesel fuel contained in a cistern for about 12 months (dirty diesel fuel) was processed according to the SPG process, on a pilot scale. In particular, the diesel fuel was first filtered through 100 µm separator filters, after which it was passed through a first filter pack with a pore size of about 25 µm and then through a coalescing filter. The diesel fuel thus recovered was filtered through a second PTFE filter pack with a pore size of 0.22 µm. The diesel fuel obtained after said filtration, purified diesel fuel, was analyzed and compared with the diesel fuel as it was sucked from the cistern.

For the analysis, a first sensor was used, OUSAF12 with absorption in the visible field, 430 nm, with EasyCal system, a NIST certified optical filter. The analysis was repeated using a second sensor, OUSBT66 with NIR absorption, at a wavelength of 860 nm.

For controlling the process, an intermediate sample of the process was also analyzed, i.e., diesel fuel before the passage through the second filter pack, diesel fuel which had already passed said separator filter, said first filter pack and said coalescing filter, intermediate diesel fuel. For comparison purposes, a sample of so-called good diesel fuel, representing the ideal level of cleanliness, was used.

The analysis gave the results shown in Table 1 (AU = absorbance units)

**Table 1**

| Sensors | Good diesel fuel | Dirty diesel fuel | Intermediate diesel fuel | Purified diesel fuel |
|---|---|---|---|---|
| OUSAF12 | 0.436 AU | 2.55 AU | 0.7 AU | 0.672 AU |
| OUSBT66 | -0.2 AU | 0.5 AU | -0.191 AU | -0.201 AU |

Both sensors used have proven suitable for the application. The 430 nm sensor ensures a better detectability, since the difference between the extremes is of about 2 AU.

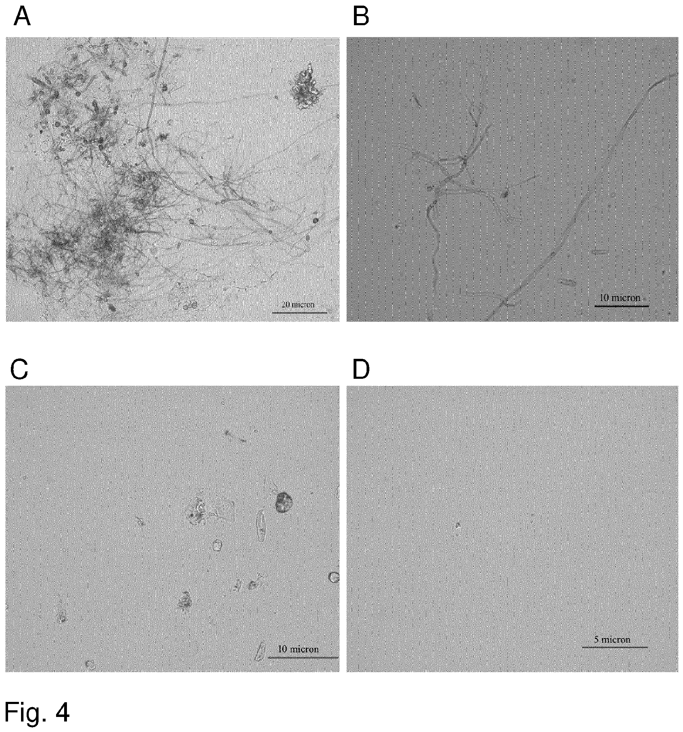

With both the sensors used, it is possible to observe how the diesel fuel purified according to the process in accordance with the present invention approaches the absorbance parameters measured on the sample considered ideal. Diesel fuel samples were also observed under an optical microscope before and during the purification process. Images representative of the observed fields are shown in Figure 4. Panel A (20x magnification) shows dirty diesel fuel, panels B and C (40x magnification) show intermediate steps of the process, pre-filtered diesel fuel 1^{st}, i.e., after passing on 100 µm filters, and pre-filtered diesel fuel 2^{nd}, i.e., after passing through 25 µm filters, respectively. Panel D (60x) shows the purified diesel fuel at the end of the process according to the present invention, without traces of impurities.

## Claims

1. A process for the purification of the diesel oil contained in a cistern and / or in a tank, where said process comprises:
- passage of the diesel oil through at least a first filter, with separation of the coarser solids, obtaining pre-filtered diesel oil;
- passage of said pre-filtered diesel oil through a filter pack made of hydrophobic material, with a pore size between 0.2 and 1 µm;
- re-introduction of the diesel fuel thus purified into the cistern and / or into the tank.

2. The process according to claim 1 which comprises:
- passage of the diesel fuel through a 100 µm self-cleaning separator filter, obtaining pre-filtered diesel fuel 1^{st};
- passage of the pre-filtered diesel fuel 1^{st} through a first 25 µm filter pack, obtaining pre-filtered diesel fuel 2^{nd};
- passage of the pre-filtered diesel fuel 2^{nd} through a coalescing filter with separate water recovery, obtaining pre-filtered diesel fuel 3 ^{rd};
- passage of the pre-filtered diesel fuel 3 ^{rd} through a second filter pack made of hydrophobic material, with a pore size between 0.2 and 1 µm, obtaining purified diesel fuel;
- re-introduction of the purified diesel into the cistern and/or the tank.

3. The process according to claim 1 or 2, which also comprises:
- washing the cistern and / or the tank with said purified diesel fuel.

4. The process according to one of claims 1 to 3, wherein said second filter pack comprises at least three filters having a pore size comprised between 0.2 and 1 µm.

5. The process according to one of claims 1 to 4, wherein said second filter pack comprises a first filter having a pore size of 1 µm, a second filter having a pore size of 0.6 µm, a third filter having a pore size of 0.2 µm.

6. The process according to one of claims 1 to 5, where said washing is carried out by spraying said purified diesel fuel through nozzles that spray at 360°, at a pressure between 50 and 90 bar, or between 60 and 80 bar, or at 70 bar, reaching a range of 2 - 20 m, or 5 - 15 m, or 10 m.

7. An implant for the purification of the diesel fuel contained in a cistern and / or in a tank, where said implant comprises:
- a pump (2) suitable for sucking diesel fuel from the cistern and / or the tank (1);
- a 100 µm self-cleaning separator filter (11);
- a first filter pack (10) with a pore size of about 25 µm;
- a coalescing filter (4)
- a tank (12) for the recovery of water from said coalescing filter (4);
- a second filter pack (5) in hydrophobic material, preferably in PTFE, with a pore size between 0.2 and 1 µm;
- optionally, a first line of purified diesel fuel (3) which collects a portion of said purified diesel fuel at the outlet of said second filter pack (5) and feeds it through nozzles (15) into said tank (1) for washing it;
- a second line of purified diesel fuel (14), for re-injection into said tank (1)
- a contaminant discharge tank (6), for collecting the contaminants from said filters (4, 5, 10, 11);
- optionally, a backwash tank (8) which receives said purified diesel fuel and, through a pump (9), re-injects it in said filters (4, 5, 11) for backwashing of the same.

8. The plant according to claim 7, which is conveniently housed on a truck.
